# FASCICULE DE BREVET EUROPEEN

(11) **EP 1 358 774 B1**
(45) Date de publication et mention de la délivrance du brevet: **16.02.2005**
(21) Numéro de dépôt: 01934076.9
(22) Date de dépôt: 10.05.2001
(51) Int. Cl.: H04Q 7/34

(54) **SYSTEME DE TEST POUR RESEAU DE RADIO-TELEPHONIE CELLULAIRE**
TESTSYSTEM IN EINEM ZELLULAREN FUNKTELEFONNETZ
TEST SYSTEM FOR CELLULAR RADIOTELEPHONE NETWORK

(30) Priorité: 08.02.2001 FR 0101696
(43) Date de publication de la demande: 05.11.2003
(73) Titulaire: SAGEM S.A., 75015 Paris (FR)
(72) Inventeur: NABEDRYK, Boris, F-75014 Paris (FR)
(74) Mandataire: Callon de Lamarck, Jean-Robert
(86) Numéro de dépôt international: PCT/FR2001/001411
(87) Numéro de publication internationale: WO 2002/063905

(56) Documents cités:
- DE-C- 19 517 393
- GB-A- 2 347 827
- US-A- 5 410 753
- US-A- 5 451 839
- "NETWORK MANAGEMENT" FR,LASSAY-LES-CHATEAUX, EUROPE MEDIA, 1993, pages 566-647, XP000860009
- "SIGNALLING TRANSFER" FR,LASSAY-LES-CHATEAUX, EUROPE MEDIA, 1993, pages 260-306, XP000860005

## Description

La présente invention est relative à un système de test pour réseau de radio-téléphonie cellulaire et notamment pour réseau GPRS.

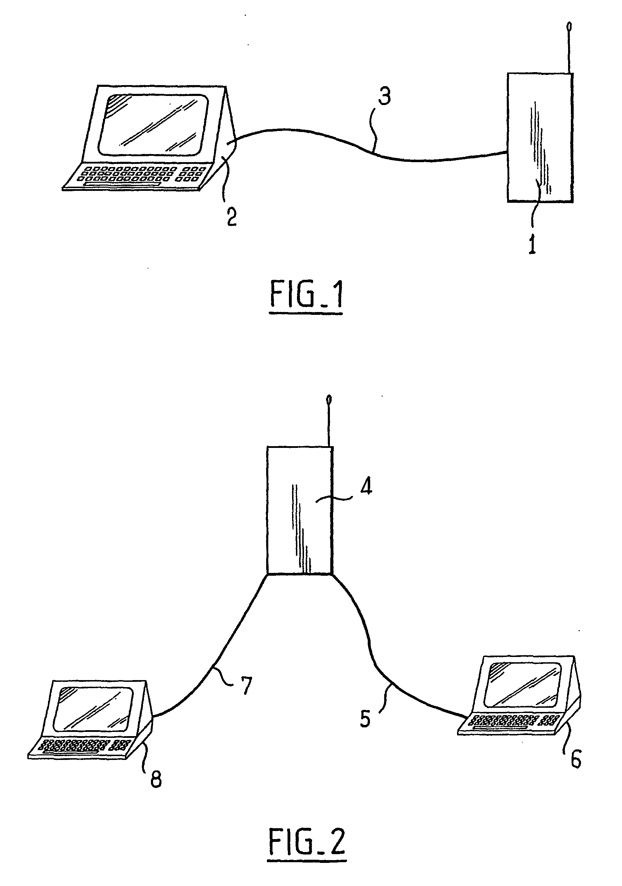

Les opérateurs de télécommunication utilisent classiquement pour tester fonctionnellement les réseaux GSM et mettre en oeuvre des mesures de couverture de réseau et de qualité de service, des systèmes, également appelés outils de traces, comportant, ainsi que l'illustre la figure 1 :
- un ou plusieurs terminaux mobiles de test 1,
- un terminal 2 qui est un instrument d'interface à partir duquel un utilisateur pilote le test et a accès aux informations dites de traces qui lui sont renvoyées par le ou les terminaux mobiles 1.

Habituellement, un mobile 1 de test est relié au terminal 2 d'interface par une seule liaison 3, à savoir une liaison série de type RS 232, les échanges d'informations entre le mobile 1 et le terminal 2 se faisant sous protocole ASCII (US 5 451 839).

Une telle liaison série n'est toutefois pas optimale et ne permet pas des débits d'échanges satisfaisants.

En particulier, elle ne permet pas, notamment dans le cas de réseaux GPRS, d'obtenir des informations de traces simultanément à la mise en oeuvre de sessions d'émission/réception sur les terminaux mobiles.

Un but de l'invention est de pallier ces problèmes et d'optimiser la gestion de la liaison série de traces.

Le système proposé par l'invention est un système de test pour réseau de radio téléphonie cellulaire comportant au moins un terminal mobile de test et des moyens de traitement et/ou de stockage auxquels ce terminal mobile est relié par une liaison série. Les moyens de traitement et/ou de stockage et le terminal mobile d'un tel système échangent par l'intermédiaire d'un protocole binaire spécifique adapté aux différents échanges de test envisageables.

Les trames de ce protocole comportent la succession de blocs suivants :
- un drapeau de début de trame,
- un bloc de champ d'identification,
- un bloc de vérification et
- un drapeau de fin de trame.

Les trames comportent en outre avantageusement un bloc de message de longueur variable, ainsi qu'un bloc donnant la longueur de ce bloc de message qui est disposé après le drapeau de début de trame et avant le bloc de message.

Le bloc de message peut être au format ASCII.

Le système présente notamment avantageusement les différentes caractéristiques suivantes prises seules ou selon toutes leurs combinaisons possibles :
- le bloc de champ d'identification comporte un sous bloc, dit de champ "catégorie", qui :
   - indique au terminal mobile si la trame qu'il reçoit en provenance des moyens de traitement et/ou de stockage correspond à une commande ou à une question,
   - indique aux moyens de traitement et/ou de stockage si la trame qu'ils reçoivent du terminal mobile correspond à un message de trace ou à une réponse ;
- le sous-bloc champ "catégorie" est codé sur deux bits ;
- le bloc de champ d'identification comporte un sous bloc, dit de champ "type", qui indique au terminal mobile ou aux moyens de traitement et/ou de stockage si la trame qu'il(s) reçoi(ven)t est relative à une information de trace intercouche, à un indicateur de qualité de service, à l'état d'une couche ou à une information de mesure, à une adaptation forcée du comportement du mobile, à une version de matériel/de logiciel ou à un message AT ;
- le sous bloc champ "type" est codé sur quatre bits ;
- le bloc de champ d'identification comporte également un bloc, dit de champ sous-type, qui est codé sur cinq bits et qui complète l'information du bloc de champ "type" ;
- le bloc de champ d'identification est codé sur deux octets.

Egalement, le système comporte avantageusement des moyens de gestion de sessions d'émission/réception auxquels le terminal mobile est relié par une deuxième liaison série, cette deuxième liaison série étant dédiée au transfert de données de communications, tandis que la première liaison série est dédiée aux échanges de test entre le terminal d'interface et le mobile.

Un tel système présente l'avantage de permettre de mettre en oeuvre des échanges de test, simultanément à la réalisation de session d'émission/réception.

D'autres caractéristiques et avantages de l'invention ressortiront encore de la description qui suit. Cette description est purement illustrative et non limitative et doit être lue en regard des dessins annexés sur lesquels :
- la figure 1, déjà analysée, illustre un système de test conforme à un mode de réalisation connu pour la téléphonie GSM ;
- la figure 2 est une représentation similaire à celle de la figure 1 qui illustre un mode de réalisation possible pour un système de test de réseau GPRS conforme à l'invention ;
- la figure 3 est une représentation illustrant le format général d'une trame de signal transmis avec la deuxième liaison série du système de la figure 2 ;
- la figure 4 est une représentation schématique du format du champ d'identification de la trame de signal représentée sur la figure 3 ;
- la figure 5 est une représentation similaire à celle de la figure 3 illustrant un autre de réalisation possible pour l'invention.

Le système représenté sur la figure 2 comporte un mobile 4 de test, qui est relié :
- par une liaison série principale 5, en l'occurrence de type RS 232, à une unité de gestion 6 et
- par une liaison série secondaire 7 à une unité d'interface 8.

L'unité 6 gère les sessions d'émission/réception, en l'occurrence GPRS, du mobile 4 de test, la liaison série 5 étant dédiée à des transferts de données de communication entre ladite unité 6 et le mobile 4.

L'unité d'interface 8 gère la détermination des informations de traces.

Bien entendu l'unité d'interface 8 et l'unité de gestion 6 peuvent être confondues, par exemple dans un même terminal de type PC.

Le protocole utilisé pour les échanges d'informations entre l'unité 8 et le mobile 4 est quant à lui un protocole binaire spécifique, compatible avec les recommandations de la norme GSM.

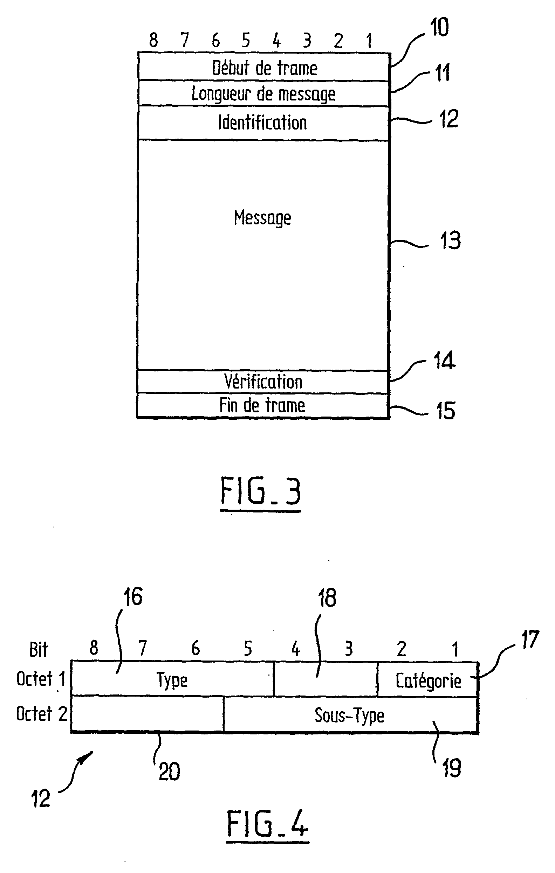

Le format utilisé par ce protocole va maintenant être décrit en référence à la figure 3.

Chaque trame échangée comporte successivement :
- un drapeau 10 de début de trame,
- un bloc 11 donnant la longueur du message,
- un bloc 12 de champ d'identification,
- un bloc 13 de message,
- un bloc 14 de vérification et
- un drapeau 15 de fin de trame.

Les drapeaux 10 et 15 de début et de fin de trame sont chacun codés sur un octet. Le bloc de vérification 14 consiste en une somme codée sur un octet, qui correspond à une fonction XOR sur les différents octets de la trame à l'exception des octets correspondant aux drapeaux de début et de fin de trames. Le bloc 11 de longueur de message est codé sur deux octets.

Le bloc de champ d'identification 12 est quant à lui codé sur deux octets. Il va maintenant être plus particulièrement décrit en référence à la figure 4.

Le bloc de champ d'identification se décompose en trois sous-blocs, à savoir un bloc de champ "type", un bloc de champ "catégorie" et un bloc de champ "sous-type".

Le bloc de champ "type" et le bloc de champ "catégorie" sont codés dans le même octet, le premier sur quatre bits (bloc 16), le deuxième sur deux bits (bloc 17). Ils sont séparés par deux bits de réserve (bloc 18). Le champ "sous type" est quant à lui codé sur cinq bits (bloc 19). Il est séparé du champ catégorie par deux bits de réserve (bloc 20).

Les différents "types" auxquels les messages correspondant au bloc 13 sont susceptibles d'appartenir sont les suivants : information de trace intercouche, indicateur de qualité de service, état d'une couche et information de mesure, adaptation forcée du comportement du mobile, version de matériel/de logiciel, message AT.

Les différentes catégories de messages sont quant à elles les suivantes : commande (de l'unité 8 au mobile 4 de test), question (de l'unité 8 au mobile 4 de test), réponse de configuration (du mobile 4 à l'unité 8), message de traces (du mobile 4 à l'unité 8).

Le champ "sous type" donne quant à lui des précisions qui complètent le champ "type".

Par exemple, dans le cas où le message appartient au type "information de trace intercouche", le champ sous type peut préciser s'il s'agit d'un message se rapportant à l'inter- couche GSM L3, ou à l'intercouche GPRS RLC/MAC ou encore à l'inter- couche GPRS GMM/SM.

Dans le cas d'un indicateur de qualité de service, le sous type indique de quel indicateur il s'agit : taux d'effacement de trames (FER), taux de retransmission de blocs RLP, taux de retransmission de blocs LLC, taux de retransmission de blocs RLC, débit des données MAC de liaison descendante, débit maximal de données MAC de liaison descendante, nombre de NPDU dans la mémoire SNDCP.

Dans le cas d'un message relatif à un état de couche ou à une information de mesure, les sous-types peuvent être les suivants : rapport de la couche 1, information supplémentaire de la couche 1, balayage de la couche 1, information MAC, information RLC, information RR, information LLC, information MM, information GMM, information SM, information SNDCP.

Dans le cas de messages relatifs à une adaptation forcée, les sous-types peuvent être les suivants : adaptation forcée BCCH en mode inoccupé, génération de rapports de mauvaises mesures, modification d'interdiction d'accès aux cellules, suppression d'une perte de trajet, sélection forcée de cellule, ignorer/accepter une re-sélection forcée contrôlée par le réseau, adaptation forcée du chiffrement LLC, adaptation forcée de la capacité de nombre de créneaux, adaptation forcée de l'accès de phase, adaptation forcée DRX, adaptation forcée de compression V42BIS, adaptation forcée de compression TCP/IP.

Les blocs 13 de message complètent le cas échéant le champ d'identification, notamment dans le cas de trames de réponse.

Ils sont de longueurs variables et peuvent, pour certaines trames, ne pas être nécessaires (cas de trames de questions notamment).

Ces blocs de messages peuvent être sous un format binaire spécifique ou sous format ASCII.

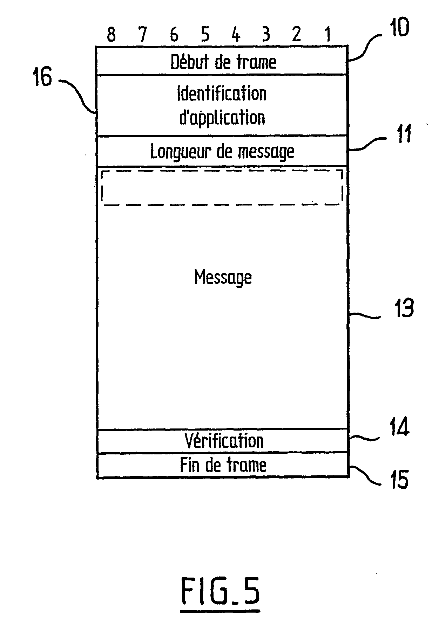

Une autre variante de l'invention a été illustrée sur la figure 5.

Cette variante permet au terminal mobile de test et aux moyens de traitement et/ou de stockage que constitue le terminal TI d'échanger sur leur lien série des messages provenant de diverses applications.

A cet effet, il est prévu que les trames de bits échangés comprennent chacune un champ 16 d'identification d'application permettant d'identifier l'application concernée.

Ce champ 16 est avantageusement disposé avant le champ 11 de longueur de message.

Le format du reste de la trame est sensiblement similaire au format des trames décrites en référence aux figures précédentes.

Notamment, chaque message applicatif comporte un bloc de message 13.

Dans le cas où la trace transmet des informations de trace, le bloc 13 comporte un champ d'en-tête d'identification 12.

Le bloc de champ d'en-tête d'identification est lui-même composé de trois niveaux de sous-champs : "type", "sous-type" et "catégorie" qui sont adaptés à ce qui a pu être requis par le terminal d'interface :
- activation/désactivation de messages de traces ;
- consultation des messages activés ;
- forçage du comportement ;
- récupération d'informations diverses ;
- gestion de plusieurs modes de fonctionnement.

Dans les autres cas - c'est à dire dans les cas où le message applicatif est un message autre qu'un message de trace - il n'est pas prévu de bloc de champ d'en-tête d'identification.

## Revendications

1. Système de test pour réseau de radio téléphonie cellulaire comportant au moins un terminal mobile de test (4) et des moyens (8) de traitement et/ou de stockage auxquels ce terminal mobile est relié par une liaison série, les moyens (8) de traitement et/ou de stockage et le terminal mobile (4) comportant des moyens pour mettre en oeuvre des échanges de test par l'intermédiaire d'un protocole binaire dont les trames comportent la succession de blocs suivants :
- un drapeau (10) de début de trame,
- un bloc (12, 16) de champ d'identification, et
- un drapeau de fin de trame (15),
**caractérisé en ce que** les trames comportent un bloc de vérification après le bloc de champ d'identification et avant le drapeau de fin de trame, et **en ce qu'**il comporte des moyens (6) de gestion de sessions d'émission/réception auxquels le terminal mobile (4) est relié par une deuxième liaison série (5), cette deuxième liaison série (5) étant dédiée au transfert de données de communications, tandis que la première liaison série (7) est dédiée aux échanges de test entre les moyens de traitement et/ou de stockage (8) et le terminal mobile (4).

2. Système selon la revendication 1, **caractérisé en ce que** les trames comportent un bloc de message (13) de longueur variable, ainsi qu'un bloc (11) donnant la longueur de ce bloc de message qui est disposé après le drapeau de début de trame et avant le bloc de message.

3. Système selon la revendication 2, **caractérisé en ce que** le bloc de message (13) est au format ASCII.

4. Système selon la revendication 3, **caractérisé en ce que** le bloc de champ d'identification (12) comporte un sous bloc (17), dit de champ "catégorie", qui :
- indique aux moyens de traitement et/ou de stockage si la trame qu'il reçoit en provenance desdits moyens (8) correspond à une commande ou à une question,
- indique aux moyens de traitement et/ou de stockage si la trame qu'ils reçoivent du terminal mobile correspond à un message de trace ou à une réponse.

5. Système selon la revendication 4, **caractérisé en ce que** le sous-bloc (17) champ "catégorie" est codé sur deux bits.

6. Système selon l'une des revendications précédentes, **caractérisé en ce que** le bloc (12) de champ d'identification comporte un sous bloc (16), dit de champ "type", qui indique au terminal mobile ou aux moyens de traitement et/ou de stockage (8) si la trame qu'il reçoit est relative à une information de trace intercouche, à un indicateur de qualité de service, à l'état d'une couche ou à une information de mesure, à une adaptation forcée du comportement du mobile, à une version de matériel/de logiciel ou à un message AT.

7. Système selon la revendication 6, **caractérisé en ce que** le sous bloc champ "type" (16) est codé sur quatre bits.

8. Système selon l'une des revendications 6 ou 7, **caractérisé en ce que** le bloc de champ d'identification comporte également un bloc (19), dit de champ sous-type, qui est codé sur cinq bits et qui complète l'information du bloc de champ "type".

9. Système selon la revendication 8, **caractérisé en ce que** le bloc de champ d'identification (12) est codé sur deux octets.

10. Système selon l'une des revendications précédentes, **caractérisé en ce que** les trames de bits échangés comprennent en outre chacune un champ d'identification d'application (16).

11. Système selon les revendications 2 et 10, **caractérisé en ce que** le champ d'identification d'application (16) est disposé avant le champ de longueur de message.

12. Système selon l'une des revendications 10 et 11, **caractérisé en ce que** dans le cas où le bloc de message transmet des informations de trace, ledit bloc de message comporte un champ d'en-tête d'identification.

## Claims

1. Test system for a cellular mobile radio network comprising at least a test mobile terminal (4) and processing and/or storage means (8) to which this mobile terminal is linked via a serial link, the processing and/or storage means (8) and the mobile terminal (4) comprising means for setting up test interchanges via a binary protocol the frames of which comprise the following sequence of blocks:
- a start-of-frame flag (10),
- an identification field block (12, 16), and
- an end-of-frame flag (15),
**characterized in that** the frames include a check block after the identification field block and before the end-of-frame flag, and **in that** it comprises transmit/receive session management means (6) to which the mobile terminal (4) is linked via a second serial link (5), this second serial link (5) being dedicated to transferring call data, whereas the first serial link (7) is dedicated to the test interchanges between the processing and/or storage means (8) and the mobile terminal (4).

2. System according to Claim 1, **characterized in that** the frames include a variable length message block (13), and a block (11) giving the length of this message block which is positioned after the start-of-frame flag and before the message block.

3. System according to Claim 2, **characterized in that** the message block (13) is in ASCII format.

4. System according to Claim 3, **characterized in that** the identification field block (12) includes a "category" field sub-block (17), which:
- indicates to the processing and/or storage means whether the frame that it receives from said means (8) corresponds to a command or to a question,
- indicates to the processing and/or storage means whether the frame that they receive from the mobile terminal corresponds to a trace message or to a response.

5. System according to Claim 4, **characterized in that** the "category" field sub-block (17) is encoded on two bits.

6. System according to one of the preceding claims, **characterized in that** the identification field block (12) includes a "type" field sub-block (16) which indicates to the mobile terminal or to the processing and/or storage means (8) whether the frame that it receives relates to inter-layer trace information, to a service quality indicator, to the state of a layer or to measurement information, to a forced adaptation of the behaviour of the mobile, to a hardware/software version or to an AT message.

7. System according to Claim 6, **characterized in that** the "type" field sub-block (16) is encoded on four bits.

8. System according to either of Claims 6 or 7, **characterized in that** the identification field block also includes a sub-type field block (19), which is encoded on five bits and which complements the information in the "type" field block.

9. System according to Claim 8, **characterized in that** the identification field block (12) is encoded on two bytes.

10. System according to one of the preceding claims, **characterized in that** the frames of bits interchanged also each include an application identification field (16).

11. System according to Claims 2 and 10, **characterized in that** the application identification field (16) is positioned before the message length field.

12. System according to either of Claims 10 and 11, **characterized in that**, in the case where the message block transmits trace information, said message block includes an identification header field.

## Patentansprüche

1. Testsystem für ein zellulares Funktelefonnetz, enthaltend mindestens ein mobiles Testendgerät (4) und Verarbeitungs- und/oder Speichermittel (8), mit welchen das mobile Endgerät über eine serielle Verbindung verbunden ist, wobei die Verarbeitungs- und/oder Speichermittel (8) und das mobile Endgerät (4) Mittel umfassen, um Testdatenaustauschvorgänge mittels eines binären Protokolls zu bewirken, dessen Rahmen die Folge der nachgenannten Blöcke umfassen:
- eine Markierung (10) des Rahmenanfangs,
- einen Block (12, 16) eines Identifikationsfeldes, und
- eine Markierung des Rahmenendes (15),
**dadurch gekennzeichnet, daß** die Rahmen nach dem Block des Identifikationsfeldes und vor der Markierung des Rahmenendes einen Verifikationsblock umfassen, und daß es Mittel (6) zum Verwalten von Sende/Empfangs-Verbindungen enthält, mit welchen das mobile Endgerät (4) durch eine zweite serielle Verbindung (5) verbunden ist, wobei diese zweite serielle Verbindung (5) zur Übertragung von Kommunikationsdaten vorgesehen ist, während die erste serielle Verbindung (7) für Testdatenaustauschvorgänge zwischen den Verarbeitungsund/oder Speichermitteln (8) und dem mobilen Endgerät (4) vorgesehen ist.

2. System nach Anspruch 1, **dadurch gekennzeichnet, daß** die Rahmen einen Nachrichtenblock (13) variabler Länge umfassen, sowie einen die Länge dieses Nachrichtenblocks angebenden Block (11), der nach der Anfangsmarkierung des Rahmens und vor dem Nachrichtenblock angeordnet ist.

3. System nach Anspruch 2, **dadurch gekennzeichnet, daß** der Nachrichtenblock (13) im ASCII-Format ist.

4. System nach Anspruch 3, **dadurch gekennzeichnet, daß** der Block des Identifikationsfeldes (12) einen Unterblock (17) enthält, "Kategorie"-Feld genannt, welcher:
- den Verarbeitungs- und/oder Speichermitteln anzeigt, ob der Rahmen, den es von den besagten Mitteln (8) herkommend empfängt, einem Befehl oder einer Anforderung entspricht,
- den Verarbeitungs- und/oder Speichermitteln anzeigt, ob der Rahmen, welchen sie von dem mobilen Endgerät empfangen, einer Ablaufverfolgungsnachricht oder einer Antwort entspricht.

5. System nach Anspruch 4, **dadurch gekennzeichnet, daß** das Feld "Kategorie" des Unterblocks (17) auf zwei Bit kodiert ist.

6. System nach einem der vorhergehenden Ansprüche, **dadurch gekennzeichnet, daß** der Block (12) des Identifikationsfeldes einen Unterblock (16) enthält, genannt Feld "Typ", welcher dem mobilen Endgerät oder den Verarbeitungs- und/oder Speichermitteln (8) anzeigt, ob der empfangene Rahmen sich auf eine Zwischenschichtablaufverfolgungsinformation, auf einen Dienstqualitätsanzeiger, auf den Zustand einer Schicht oder auf eine Meßinformtion, auf eine Zwangsanpassung des Verhaltens des Mobilteils, auf eine Hardware/Software-Version oder auf eine AT-Nachricht bezieht.

7. System nach Anspruch 6, **dadurch gekennzeichnet, daß** das Unterblockfeld "Typ" (16) auf vier Bit kodiert ist.

8. System nach einem der Ansprüche 6 oder 7, **dadurch gekennzeichnet, daß** der Block des Identifikationsfeldes gleichermaßen einen Block (19) enthält, genannt Feld "Untertyp", der auf fünf Bit kodiert ist und der die Information des Blocks des Feldes "Typ" ergänzt.

9. System nach Anspruch 8, **dadurch gekennzeichnet, daß** der Block des Identifikationsfeldes (12) auf zwei Byte kodiert ist.

10. System nach einem der vorhergehenden Ansprüche, **dadurch gekennzeichnet, daß** die Rahmen der ausgetauschten Bits außerdem jeweils ein Anwendungsidentifikationsfeld (16) enthalten.

11. System nach den Ansprüchen 2 und 10, **dadurch gekennzeichnet, daß** das Anwendungsidentifikationsfeld (16) vor dem Nachrichtenlängenfeld angeordnet ist.

12. System nach einem der Ansprüche 10 und 11, **dadurch gekennzeichnet, daß** im Falle, wo der Nachrichtenblock Ablaufverfolgungsinformationen überträgt, der besagte Nachrichtenblock ein Identifikationskopffeld enthält.
